# EUROPÄISCHE PATENTSCHRIFT

(11) **EP 2 674 308 B1**
(45) Veröffentlichungstag und Bekanntmachung des Hinweises auf die Patenterteilung: **28.01.2015**
(21) Anmeldenummer: 13002346.8
(22) Anmeldetag: 02.05.2013
(51) Int. Cl.: B60G 17/017, B60G 17/052, B60P 1/02, B60G 17/016

(54) **Vorrichtung und Verfahren zur Änderung der Höhe eines Fahrzeugaufbaus**
Apparatus and method for changing the height of a vehicle body
Dispositif et procédé de modification de la hauteur d'une structure de véhicule

(30) Priorität: 16.06.2012 DE 102012011984
(43) Veröffentlichungstag der Anmeldung: 18.12.2013
(73) Patentinhaber: WABCO GmbH, 30453 Hannover (DE)
(72) Erfinder: Stender, Axel, 31787 Hameln (DE)

(56) Entgegenhaltungen:
- EP-A1- 2 489 531
- EP-A2- 1 787 613
- WO-A1-2006/071169
- DE-A1- 2 328 751
- DE-A1-102006 057 610
- DE-U1-202005 017 153
- JP-A- S61 241 210
- JP-U- H0 584 510

## Beschreibung

Die Erfindung betrifft eine Vorrichtung gemäß dem Oberbegriff des Anspruchs 1.

Zum einfacheren und schnelleren Be- und Entladen fahren Fahrzeuge mit einer Ladefläche an eine Laderampe. Dabei sollte die Ladefläche die gleiche Höhe aufweisen wie die Laderampe. In den meisten Fällen ist eine Anpassung erforderlich. Dies kann manuell über eine Niveauregulierung des Fahrzeugs erfolgen, etwa durch geeignete Funktionalität der Luftfederung. Wünschenswert ist eine mit einfachen Mitteln erzielbare, schnelle Anpassung der Höhe, um Wartezeit oder Stillstandszeit zu vermeiden.

Aus der DE 23 28 751 ist es bekannt, die Laderampe mit Reflektoren und das Fahrzeug mit mehreren optischen Detektoren übereinander auszustatten. Der Fahrzeugaufbau wird von der Luftfederung so weit angehoben, bis von den optischen Detektoren reflektierte Signale ausreichender Intensität erfasst werden. Nachteilig ist hier, dass die Laderampe mit Reflektoren versehen werden muss und dass ein Fahrzeug üblicherweise keine optischen Detektoren zur Helligkeitsbestimmung aufweist.

In der WO 2006/071169 A1 ist eine positionsgestützte Niveauregulierung beschrieben, bei der das Niveau in Abhängigkeit von der Position des Fahrzeugs verändert wird.

Eine elektronisch geregelte Luftfederung, u. a. mit der Möglichkeit der manuellen Niveauregulierung des Fahrzeugaufbaus ist aus der Praxis bekannt. Der Fahrer des Fahrzeugs kann an eine Rampe heranfahren und dann das Niveau des Fahrzeugaufbaus an das Niveau der Rampe anpassen.

Weiterhin ist ein Rückraumüberwachungssystem mit Entfernungsdetektoren aus der Praxis bekannt. Das System wird beim Einlegen des Rückwärtsgangs aktiviert und signalisiert dem Fahrer die Entfernung des Fahrzeugs zur Rampe.

Die Dokumente EP 1 787 613 A2, DE 20 2005 017 153 U1, DE 10 2006 057 610 A1 und JP 61 241210 A offenbaren jeweils eine Vorrichtung, mittels derer die Höhe eines Fahrzeugs an die Höhe eines anderen Objektes, wie z. B. einer Rampe, angepasst werden kann, wobei diese Vorrichtung mindestens einen Sensor zur Bestimmung der Höhe des Objektes aufweist.

Aufgabe der vorliegenden Erfindung ist die Schaffung einer Vorrichtung zur gesteuerten Änderung der Höhe eines Fahrzeugaufbaus relativ zu einer Rampe, insbesondere derart, dass die Vorrichtung einfach und kostengünstig realisierbar ist.

Die erfindungsgemäße Vorrichtung weist die Merkmale des Anspruchs 6 auf. Die Vorrichtung ist mit mindestens einem Entfernungsdetektor versehen und darüber hinaus mit einer Einrichtung zur Regelung der Höhe des Fahrzeugaufbaus in Abhängigkeit von den Signalen des Entfernungsdetektors. Der mindestens eine Entfernungsdetektor einerseits und die Einrichtung zur Regelung der Höhe des Fahrzeugaufbaus andererseits sind regelungstechnisch miteinander gekoppelt. Zur Vereinfachung werden hier ein Fahrzeugchassis und auf dem Chassis befindliche Aufbauten unter dem Begriff "Fahrzeugaufbau" zusammengefasst. Entsprechend handelt es sich hier beim Fahrzeugaufbau um die Fahrzeugteile, welche am Fahrwerk auf Federn gelagert sind. Als Federn sind vorzugsweise Luftfedern vorgesehen, mit denen zugleich die Höhe des Fahrzeugaufbaus relativ zum Fahrwerk veränderbar ist.

Vorteilhafterweise ist der Entfernungsdetektor so angeordnet, dass ein Erfassungskegel im Wesentlichen horizontal bzw. parallel zu einer Rampenfläche ausgerichtet ist. Typischerweise hat der Entfernungsdetektor einen Erfassungskegel, der auch asymmetrisch oder leicht abweichend zur horizontalen Richtung ausgebildet sein kann. Die Abweichung kann vorzugsweise bis zu 30° (plus/minus) und insbesondere nur bis zu 5° (plus/minus) betragen.

Alternativ kann einer zusätzliche Entfernungsdetektor so angeordnet sein, dass ein Erfassungskegel im Wesentlichen vertikal abwärts bzw. senkrecht zu einer Rampenfläche ausgerichtet ist. Auch hier kann der Erfassungskegel leicht abweichend von der senkrechten Richtung verlaufen, insbesondere bis zu 30°.

Besonders vorteilhaft ist eine Ausführung, bei der der Entfernungsdetektor ein Ultraschallsensor, ein lasergestützter Detektor oder ein radargestützter Detektor ist. Alternativ können auch andere akustische, elektromagnetische oder rein optische Entfernungsdetektoren vorgesehen sein.

Vorteilhafterweise handelt es sich bei der Einrichtung zur Regelung der Höhe des Fahrzeugaufbaus um eine elektronisch geregelte Luftfederungsanlage. Diese ist mit dem mindestens einen Entfernungsdetektor gekoppelt. Für die Regelung wichtige Daten der Fahrzeuggeometrie können in einer ECU (Electronic Control Unit) des Fahrzeugs mit abgelegt sein, z. B. die Höhe des Entfernungsdetektors relativ zu einer Ladefläche des Fahrzeugs und die Form des Erfassungskegels.

Gegenstand der Erfindung ist auch ein Fahrzeug mit einer erfindungsgemäßen Vorrichtung bzw. mit einer die voranstehend erläuterten Merkmale aufweisenden Vorrichtung. Bei dem Fahrzeug handelt es sich typischerweise um einen Lastkraftwagen, insbesondere ein Zugfahrzeug oder Anhängerfahrzeug. Das Fahrzeug weist vorzugsweise rückwärtig oder seitlich Entfernungsdetektoren auf. Diese können außerdem oberhalb einer Ladefläche, nahe einer Oberseite des Fahrzeugs oder vorzugsweise auch knapp unterhalb eines Fahrzeugbodens bzw. der Ladefläche vorgesehen sein.

Ebenfalls Gegenstand der Erfindung ist ein Verfahren zur Änderung der Höhe eines Fahrzeugaufbaus eines Fahrzeugs relativ zu einer Rampe, wobei das Fahrzeug mindestens einen Entfernungsdetektor und eine Einrichtung zur Regelung der Höhe des Fahrzeugaufbaus aufweist. Erfindungsgemäß ist vorgesehen, dass die Einrichtung zur Regelung der Höhe des Fahrzeugaufbaus Signale des Entfernungsdetektors zumindest mittelbar verarbeitet und so die Höhe des Fahrzeugaufbaus relativ zur Rampe regelt. Dabei wird vorzugsweise davon ausgegangen, dass sich das Fahrzeug dicht an der Rampe oder kurz vor der Rampe befindet. Moderne Lastkraftwagen sind ohnehin mit einer elektronischen Luftfederung, Entfernungsdetektoren für die Rückwärtsfahrt und ECUs (Electronic Control Units) für diverse Aufgaben ausgestattet. Die ECUs sind durch einen CAN-Bus verbunden und können darüber Daten austauschen. Das erfindungsgemäße Verfahren verknüpft die Niveauregelung der elektronischen Luftfederung mit den vom Entfernungsdetektor gelieferten Signalen, um die Höhe des Fahrzeugaufbaus an die Höhe der angefahrenen Rampe anzupassen, und ist durch neue Software in der ECU für die elektronische Luftfederung realisierbar. Bei Fahrzeugen ohne elektronische Luftfederung und ohne Entfernungsdetektoren können eine Einrichtung zur Regelung der Höhe des Fahrzeugaufbaus und ein Entfernungsdetektor nachgerüstet werden.

Nach dem Gedanken der Erfindung erfasst der Entfernungsdetektor eine horizontale Entfernung der Rampe zum Entfernungsdetektor. Dabei wird die Höhe des Fahrzeugaufbaus zumindest verändert, bis ein Sprung im Signal des Entfernungsdetektors vorliegt. "Sprung" bedeutet in diesem Fall, dass der Erfassungskegel des Entfernungsdetektors eine Kante der Rampe nach oben oder unten passiert. Dabei ändert sich das vom Entfernungsdetektor ausgegebene Signal deutlich stärker als zuvor oder sogar sprunghaft, da die Vorderkante der Rampe oder eine senkrechte Rampenwand zum Fahrzeug eine ganz andere Entfernung aufweisen als auf der Rampe anschließende Gebäudeteile einer typischen Einrichtung zum Be- und Entladen von Gütern.

Eine vorteilhafte Weiterbildung des Verfahrens ist durch folgende Schritte gekennzeichnet:
a) Das Fahrzeug fährt an die Rampe heran, ein horizontaler Abstand zur Rampe wird vom Entfernungsdetektor erfasst;
b) die Höhe des Entfernungsdetektors wird durch Anheben desselben soweit geändert, bis ein Erfassungskegel des Entfernungsdetektors die Rampe nach oben verlässt und dann oberhalb der Rampe verläuft;
c) die Änderung der Höhe des Entfernungsdetektors wird erfasst, sobald der Erfassungskegel die Rampe nach oben verlässt und sich ein Sprung im Signal des Entfernungsdetektors ergibt;
d) aus der Änderung der Höhe des Entfernungsdetektors beim Sprung im Signal des Entfernungsdetektors werden die Höhe der Rampe abgeleitet und anschließend die Höhe des Fahrzeugaufbaus angepasst.

Üblicherweise ist der Entfernungsdetektor bei der Anfahrt an die Rampe so niedrig positioniert, dass die Rampe im Erfassungskegel liegt. Anderenfalls kann dies vorzugsweise in einem vorangehenden Schritt sichergestellt werden durch Anheben oder Absenken des Entfernungsdetektors.

Vorteilhafterweise wird oben in Schritt b) der Fahrzeugaufbau mit dem daran angeordneten Entfernungsdetektor angehoben. Dies ist beispielsweise möglich bei einer Niveauregulierung und/oder einer elektronischen Luftfederungsanlage. Dabei wird der Fahrzeugaufbau relativ zum Fahrwerk in der Höhe verändert. Alternativ ist eine Höhenverstellung des Entfernungsdetektors am Fahrzeugaufbau (also relativ zu diesem) vorgesehen.

Eine vorteilhafte Weiterbildung des Verfahrens ist durch folgende Schritte gekennzeichnet:
a) Das Fahrzeug fährt an die Rampe heran, ein horizontaler Abstand zur Rampe wird vom Entfernungsdetektor erfasst und abgespeichert;
b) der Fahrzeugaufbau wird angehoben bis ein Erfassungskegel des Entfernungsdetektors die Rampe nach oben verlässt und dann oberhalb der Rampe verläuft;
c) danach wird der Fahrzeugaufbau wieder abgesenkt, bis wieder ein Abstand zur Rampe gemessen wird, der dem in a) gespeicherten Abstand entspricht;
d) danach wird der Fahrzeugaufbau um einen gespeicherten Abstand des Entfernungsdetektors zu einer Ladefläche des Fahrzeugs plus einer halben Höhe des Erfassungskegels abgesenkt.

Vorteilhafterweise erfasst ein zusätzlicher Entfernungsdetektor eine vertikale Entfernung der Rampe zum zusätzlichen Entfernungsdetektor. Besonders vorteilhaft ist dies bei Fahrzeugen mit einem zusätzlichen Entfernungsdetektor oberhalb des Fahrzeugbodens bzw. der Ladefläche oder sogar im Dachbereich. Die Entfernung des Entfernungsdetektors vom Fahrzeugboden ist konstant und bekannt. Eine direkte Anpassung der Höhe des Fahrzeugaufbaus aufgrund der Signale des Entfernungsdetektors ist somit möglich.

Die Höhe des Erfassungskegels, auch in Abhängigkeit von der Entfernung zum Entfernungsdetektor ist ebenso wie der Abstand des Entfernungsdetektors zur Ladefläche bekannt und kann leicht in die Berechnung einfließen.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: einen hinteren Teil eines Fahrzeugs mit horizontal gerichtetem Entfernungsdetektor, nahe einer Rampe und mit von einer Luftfederung angehobenem Fahrzeugaufbau,
- Fig. 2 und Fig. 3: eine Darstellung wie in Fig. 1, jedoch mit abgesenktem Fahrzeugaufbau,
- Fig. 4: einen hinteren Teil eines Fahrzeugs mit abwärts gerichtetem Entfernungsdetektor nahe einer Rampe, der nicht-erfindungsgemäß ist.

Ein Fahrzeug weist einen auf einem Fahrwerk 10 federnd gelagerten Fahrzeugaufbau 11 auf. Die federnde Lagerung ist hier realisiert durch eine nicht näher gezeigte elektronische Luftfederung mit Niveauregelung und zugeordneter ECU. Damit ist ein Anheben und Absenken des Fahrzeugaufbaus 11 relativ zum Fahrwerk 10 in Grenzen möglich. Der Fahrer des Fahrzeugs kann an eine Rampe 12 heranfahren und dann das Niveau des Fahrzeugaufbaus 11 an das Niveau der Rampe 12 anpassen, um so das Be- und Entladen des Fahrzeugs zu erleichtern. Ziel ist eine Niveauregulierung derart, dass eine Ladefläche 13 des Fahrzeugs auf dem gleichen Niveau liegt, wie eine Rampenfläche 14.

Im vorliegenden Fall erfolgt die Anpassung des Niveaus automatisch oder zumindest halbautomatisch. Das Fahrzeug weist an seinem rückwärtigen Ende, knapp unterhalb der Ladefläche 13 einen Entfernungsdetektor 15 auf, dessen Erfassungskegel 16 etwa horizontal gegen die Rampe 12 gerichtet ist bzw. parallel zur Rampenfläche 14 verläuft.

Das Fahrzeug fährt rückwärts gegen die Rampe 12. Üblicherweise ist dabei der Fahrzeugaufbau 11 soweit abgesenkt, dass der Entfernungsdetektor 15 eine äußere, senkrechte Rampenwand 17 detektiert. Die Rampenwand 17 liegt im Erfassungskegel 16. Der Entfernungsdetektor 15 ist hier ein Ultraschallsensor mit Sender und Empfänger.

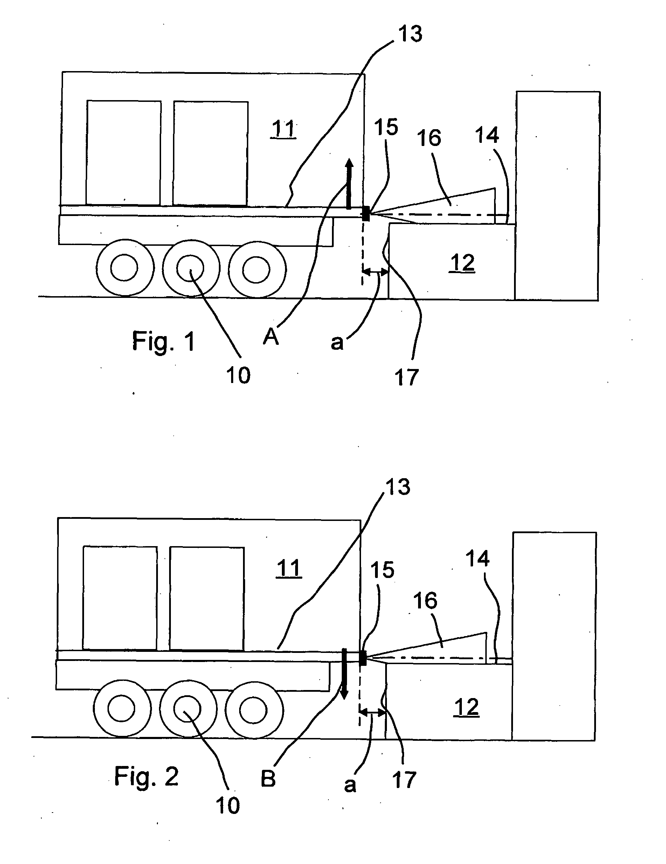

Kurz vor Erreichen der Rampe 12 stoppt das Fahrzeug, entweder aufgrund der Bedienung durch den Fahrer oder durch eine elektronische Regelung mit voreingestelltem Abstandswert. Nun beginnt die automatische Höhenanpassung. Ein Abstand a zwischen Fahrzeug und Rampe 12 wird von der Fahrzeugelektronik abgespeichert. Anschließend wird der Fahrzeugaufbau durch die Luftfederung angehoben, siehe Pfeil A in Fig. 1, bis der Erfassungskegel 16 die Rampenwand 17 verlässt und demnach der Entfernungsdetektor 15 einen deutlich größeren Abstandswert feststellt als zuvor.

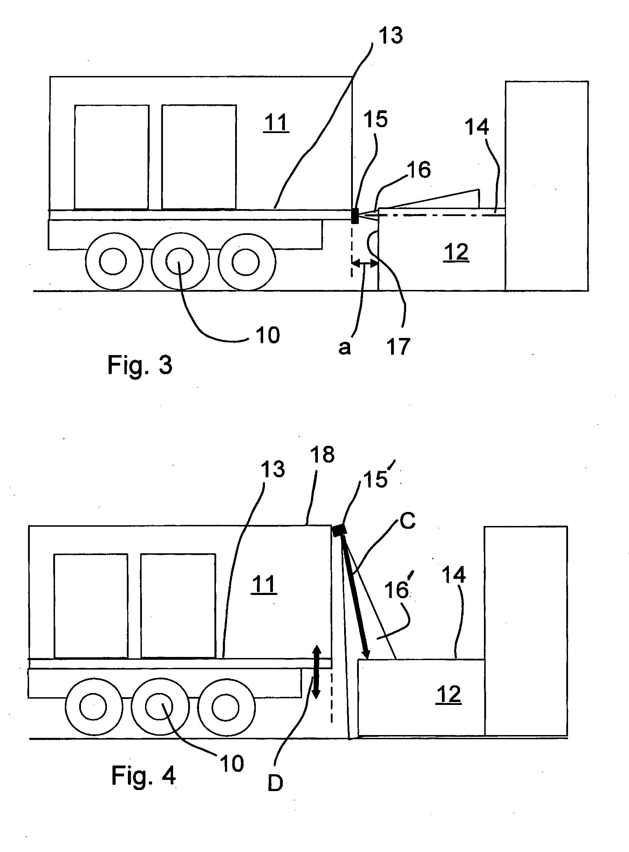

Danach wird der Fahrzeugaufbau 11 wieder abgesenkt, siehe Pfeil B in Fig. 2, bis ein Abstand zur Rampenwand 17 gemessen wird, der dem vorher gespeicherten Abstandswert a entspricht. Das heißt, beim Absenken des Fahrzeugaufbaus 11 gemäß Fig. 2 gelangt die Rampenwand 17 gerade wieder in den Erfassungskegel 16. Sobald dies geschieht, ist eine virtuelle Nulllinie erreicht. Ausgehend von dieser virtuellen Nulllinie wird der Fahrzeugaufbau weiter abgesenkt um einen gespeicherten vertikalen Abstand des Entfernungsdetektors 15 zur Ladefläche 13 zuzüglich der halben Höhe des Erfassungskegels 16, siehe Fig. 3. Anschließend liegt die Ladefläche 13 auf dem Niveau der Rampenfläche 14.

Fig. 4 zeigt eine Abwandlung, die nicht-erfindungsgemäß ist. Hier ist ein Entfernungsdetektor 15' wie zuvor an der Rückseite des Fahrzeugs angeordnet, jedoch nahe einer Dachfläche 18 und so gerichtet, dass der Erfassungskegel 16' im Wesentlichen abwärts, nämlich in Richtung auf die Rampenfläche 14 gerichtet ist, siehe Pfeil C. In der Abwandlung gemäß Fig. 4 ist zusätzlich ein nicht gezeigter Entfernungsdetektor wie in den Fig. 1 und 3 vorgesehen, so dass eine Annäherung an die Rampe 12 detektierbar ist.

Der in Fig. 4 gezeigte, oben angeordnete Entfernungsdetektor 15' erfasst bei dem an der Rampe 12 stehenden Fahrzeug unmittelbar den vertikalen Abstand zur Rampenfläche 14. Da der vertikale Abstand zwischen Entfernungsdetektor 15' und Ladefläche 13 und die Ausrichtung und Form des Erfassungskegels 16' bekannt sind, kann die elektronisch geregelte Luftfederung unmittelbar die Höhe des Fahrzeugaufbaus 11 an die Höhe der Rampenfläche 14 anpassen, siehe Doppelpfeil D.

Der in Fig. 4 nahe der Dachfläche 18 angeordnete Entfernungsdetektor 15' kann auch etwas tiefer angeordnet sein, etwa an der Oberkante einer Hintertür des Fahrzeugaufbaus 11 oder noch niedriger. Wichtig ist hier der abwärtsgerichtete Erfassungskegel 16'.

Die beschriebene Niveauregelung des Fahrzeugaufbaus 11 ist vom Fahrer steuerbar, ohne dass der Fahrer aussteigen muss. Auch kann durch die automatische Regelung und die beschriebenen Bestandteile eine sehr genaue Anpassung erfolgen. Ein Zeitverlust durch manuelle Einstellung wird vermieden, ebenso eine Gefährdung des Fahrers durch Bewegung desselben zwischen mehreren an einer Rampe stehenden Fahrzeugen.

## Patentansprüche

1. Verfahren zur Änderung der Höhe eines Fahrzeugaufbaus (11) eines Fahrzeugs relativ zu einer Rampe (12), wobei das Fahrzeug mindestens einen Entfernungsdetektor (15) und eine Einrichtung zur Regelung der Höhe des Fahrzeugaufbaus (11) aufweist, wobei die Einrichtung zur Regelung der Höhe des Fahrzeugaufbaus (11) Signale des Entfernungsdetektors (15) zumindest mittelbar verarbeitet und so die Höhe des Fahrzeugaufbaus (11) relativ zur Rampe (12) regelt, **gekennzeichnet durch** folgende Schritte:
a) das Fahrzeug fährt an die Rampe (12) heran, ein horizontaler Abstand zur Rampe (12) wird vom Entfernungsdetektor (15) erfasst;
b) die Höhe des Entfernungsdetektors (15) wird **durch** Anheben des Fahrzeugaufbaus soweit geändert, bis ein Erfassungskegel (16) des Entfernungsdetektors (15) die Rampe (12) nach oben verlässt und dann oberhalb der Rampe (12) verläuft;
c) die Änderung der Höhe des Entfernungsdetektors (15) wird erfasst, sobald der Erfassungskegel (16) die Rampe (12) nach oben verlässt und sich ein Sprung im Signal des Entfernungsdetektors (15) ergibt;
d) aus der Änderung der Höhe des Entfernungsdetektors (15) beim Sprung im Signal des Entfernungsdetektors (15) wird die Höhe der Rampe (12) abgeleitet und anschließend die Höhe des Fahrzeugaufbaus (11) angepasst.

2. Verfahren nach Anspruch 1, **dadurch gekennzeichnet, dass** der Entfernungsdetektor (15) die vertikale Entfernung der Rampe (12) zum Entfernungsdetektor (15) erfasst.

3. Verfahren nach Anspruch 1 oder 2, **dadurch gekennzeichnet, dass** der Entfernungsdetektor (15) eine horizontale Entfernung der Rampe zum Entfernungsdetektor (15) erfasst, und dass die Höhe des Fahrzeugaufbaus (11) zumindest verändert wird, bis ein Sprung im Signal des Entfernungsdetektors (15) vorliegt.

4. Verfahren nach Anspruch 1, **dadurch gekennzeichnet, dass** im Schritt b) der Fahrzeugaufbau (11) mit dem Entfernungsdetektor (15) angehoben wird.

5. Verfahren nach Anspruch 1 oder einem der weiteren Ansprüche, **gekennzeichnet durch** folgende Schritte:
a) der erfasste horizontale Abstand zur Rampe (12) wird abgespeichert;
b) der Fahrzeugaufbau (11) wird angehoben, bis ein Erfassungskegel (16) des Entfernungsdetektors (15) die Rampe (12) nach oben verlässt und dann oberhalb der Rampe verläuft;
c) danach wird der Fahrzeugaufbau (11) wieder abgesenkt, bis ein Abstand zur Rampe (12) gemessen wird, der dem in Schritt a) gespeicherten Abstand entspricht;
d) danach wird der Fahrzeugaufbau (11) um einen gespeicherten Abstand des Entfernungsdetektors (15) zu einer Ladefläche (13) des Fahrzeugs zuzüglich einer halben Höhe des Erfassungskegels (16) abgesenkt.

6. Vorrichtung zur Durchführung eines Verfahrens gemäß einem oder mehreren der vorstehenden Ansprüche.

7. Fahrzeug mit einer Vorrichtung nach Anspruch 6.

## Claims

1. Method for changing the height of a vehicle body (11) of a vehicle relative to a ramp (12), wherein the vehicle has at least one distance detector (15) and a device for regulating the height of the vehicle body (11), wherein the device for regulating the height of the vehicle body (11) processes signals of the distance detector (15) at least indirectly and therefore regulates the height of the vehicle body (11) relative to the ramp (12), **characterized by** the following steps:
a) the vehicle drives up to the ramp (12) and a horizontal distance from the ramp (12) is detected by the distance detector (15);
b) the height of the distance detector (15) is changed by raising the vehicle body until a detection cone (16) of the distance detector (15) exits the ramp (12) in the upward direction and then runs above the ramp (12);
c) the change in the height of the distance detector (15) is detected as soon as the detection cone (16) exits the ramp (12) in the upward direction, and there is a jump in the signal of the distance detector (15); and
d) the height of the ramp (12) is derived, and subsequently the height of the vehicle body (11) is adapted, from the change in the height of the distance detector (15) when the jump occurs in the signal of the distance detector (15).

2. Method according to Claim 1, **characterized in that** the distance detector (15) detects the vertical distance of the ramp (12) from the distance detector (15).

3. Method according to Claim 1 or 2, **characterized in that** the distance detector (15) detects a horizontal distance of the ramp from the distance detector (15) and **in that** the height of the vehicle body (11) is changed at least until there is a jump in the signal of the distance detector (15).

4. Method according to Claim 1, **characterized in that** in the step (b) the vehicle body (11) with the distance detector (15) is raised.

5. Method according to Claim 1 or one of the further claims, **characterized by** the following steps:
a) the detected horizontal distance from the ramp (12) is stored;
b) the vehicle body (11) is raised until a detection cone (16) of the distance detector (15) exits the ramp (12) in the upward direction and then runs above the ramp;
c) the vehicle body (11) is then lowered again until a distance from the ramp (12) which corresponds to the distance stored in step a) is measured; and
d) the vehicle body (11) is then lowered by a stored distance of the distance detector (15) with respect to a loading surface (13) of the vehicle plus half the height of the detection cone (16).

6. Apparatus for carrying out a method according to one or more of the preceding claims.

7. Vehicle having a device according to Claim 6.

## Revendications

1. Procédé de modification de la hauteur d'une structure de véhicule (11) d'un véhicule par rapport à une rampe (12), le véhicule comportant au moins un détecteur d'éloignement (15) et un dispositif de réglage de la hauteur de la structure de véhicule (11), le dispositif de réglage de la hauteur de la structure de véhicule (11) traitant au moins indirectement des signaux du détecteur d'éloignement (15) et réglant ainsi la hauteur de la structure de véhicule (11) par rapport à la rampe (12), **caractérisé par** les étapes suivantes :
a) le véhicule arrive au niveau de la rampe (12), une distance horizontale par rapport à la rampe (12) est détectée par le détecteur d'éloignement (15) ;
b) la hauteur du détecteur d'éloignement (15) est modifiée par soulèvement de la structure de véhicule jusqu'à ce qu'un cône de détection (16) du détecteur d'éloignement (15) quitte la rampe (12) vers le haut puis s'étende au-dessus de la rampe (12) ;
c) la modification de la hauteur du détecteur d'éloignement (15) est détectée dès lors que le cône de détection (16) quitte la rampe (12) vers le haut et qu'un saut se produit dans le signal du détecteur d'éloignement (15) ;
d) la modification de la hauteur du détecteur d'éloignement (15) produisant un saut dans le signal du détecteur d'éloignement (15) permet de déduire la présence d'une variation de hauteur de la rampe (12) puis d'adapter la hauteur de la structure de véhicule (11).

2. Procédé selon la revendication 1, **caractérisé en ce que** le détecteur d'éloignement (15) détecte l'éloignement vertical de la rampe (12) par rapport au détecteur d'éloignement (15).

3. Procédé selon la revendication 1 ou 2, **caractérisé en ce que** le détecteur d'éloignement (15) détecte un éloignement horizontal de la rampe par rapport au détecteur d'éloignement (15) et que la hauteur de la structure de véhicule (11) est au moins modifiée jusqu'à ce qu'un saut se produise dans le signal du détecteur d'éloignement (15).

4. Procédé selon la revendication 1, **caractérisé en ce qu'**à l'étape b), la structure de véhicule (11) est soulevée avec le détecteur d'éloignement (15).

5. Procédé selon la revendication 1 ou l'une quelconque des revendications supplémentaires, **caractérisé par** les étapes suivantes :
a) mémorisation de la distance détectée par rapport à la rampe (12) ;
b) soulèvement de la structure de véhicule (11) jusqu'à ce qu'un cône de détection (16) du détecteur d'éloignement (15) quitte la rampe (12) vers le haut puis s'étende au-dessus de la rampe ;
c) nouveau rabaissement de la structure de véhicule (11) jusqu'à ce que la distance par rapport à la rampe (12) correspondant à la distance mémorisée à l'étape a) soit mesurée ;
d) puis rabaissement de la structure de véhicule (11) d'une distance mémorisée du détecteur d'éloignement (15) par rapport à une surface de charge (13) du véhicule par rapport à une demi-hauteur du cône de détection (16).

6. Dispositif de mise en oeuvre d'un procédé selon l'une quelconque des revendications précédentes ou plusieurs d'entre elles.

7. Véhicule doté d'un dispositif selon la revendication 6.
